# EUROPÄISCHE PATENTSCHRIFT

(11) **EP 2 283 594 B1**
(45) Veröffentlichungstag und Bekanntmachung des Hinweises auf die Patenterteilung: **07.03.2012**
(21) Anmeldenummer: 09768912.9
(22) Anmeldetag: 10.06.2009
(51) Int. Cl.: H04B 10/158

(54) **INFRAROT-EMPFÄNGERSCHALTUNG**
INFRARED RECEIVER CIRCUIT
CIRCUIT RÉCEPTEUR INFRAROUGE

(30) Priorität: 23.06.2008 DE 102008029620
(43) Veröffentlichungstag der Anmeldung: 16.02.2011
(73) Patentinhaber: Vishay Semiconductor GmbH, 74072 Heilbronn (DE)
(72) Erfinder: FUCHS NUNES, Markus, 54329 Konz (DE)
(74) Vertreter: Manitz, Finsterwald & Partner GbR
(86) Internationale Anmeldenummer: PCT/EP2009/004204
(87) Internationale Veröffentlichungsnummer: WO 2009/156063

(56) Entgegenhaltungen:
- WO-A-02/13403
- WO-A-2005/046094
- US-A1- 2007 285 155

## Beschreibung

Die vorliegende Erfindung betrifft eine Infrarot-Empfängerschaltung zum Verarbeiten eines trägermodulierten Infrarotsignals, mit einer Verstärkerschaltung und einem der Verstärkerschaltung nachgeschalteten Demodulator, wobei ein Komparator vorgesehen ist, der dazu ausgelegt ist, das Ausgangssignal der Verstärkerschaltung oder eines der Verstärkerschaltung nachgeschalteten Bandpassfilters durch Vergleich mit einem Schwellwert zu digitalisieren, um ein Pulsfolgensignal zu erzeugen.

Zur Erzeugung eines derartigen Infrarotsignals (IR-Signals) werden ein zu übertragender Steuerbefehl oder sonstige Daten auf ein Trägersignal aufmoduliert, beispielsweise unter Verwendung einer Amplitudenmodulation oder eines digitalen Modulationsverfahrens. Derartige Infrarotsignale werden beispielsweise von Fernbedienungseinheiten abgesetzt und können zur Steuerung von Fernseh- oder DVD-Geräten dienen. An dem jeweiligen Gerät ist üblicherweise eine Photodiode angeordnet, deren Ausgang mit einem Eingang der genannten Infrarot-Empfängerschaltung (IR-Empfängerschaltung) verbunden ist. Die Photodiode wandelt das im infraroten Spektralbereich ausgesendete und empfangene Signal in elektrische Signale um (Photostrom). Diese elektrischen Signale werden in der IR-Empfängerschaltung verstärkt, vorzugsweise bandpassgefiltert und anschließend demoduliert, so dass an einem Ausgang der IR-Empfängerschaltung der in dem Infrarotsignal verschlüsselte Steuerbefehl oder sonstige Datensatz in Form eines bereits demodulierten Ausgangssignals ausgegeben werden kann.

Speziell kann eine derartige IR-Empfängerschaltung eine automatische Verstärkungsregelung enthalten, durch die die Verstärkung der IR-Empfängerschaltung der Empfangsqualität entsprechend eingeregelt wird, wodurch eine hohe Empfindlichkeit für die Empfangssignale erreicht wird, jedoch gleichzeitig Störeinflüsse, die beispielsweise von Fremdlicht herrühren, weitgehend unterdrückt werden.

In der EP 1 238 468 B1 ist die automatische Verstärkungsregelung aus einem Regelverstärker und einer Regelschaltung mit einem Regellogikteil aufgebaut. Hierzu weist das Regellogikteil einen Komparator (in der EP 1 238 468 B 1 nicht explizit beschrieben) auf, der das Ausgangssignal eines Bandpassfilters mit einem Regelschwellwert vergleicht und einen Rechteckpuls generiert, wenn das Ausgangssignal des Bandpassfilters den Regelschwellwert überschreitet. Das Ausgangssignal des Komparators steuert ein Monoflop (in der EP 1 238 468 B1 nicht explizit beschrieben), das jeweils für eine vorgegebene Zeit gesetzt wird, wenn der Komparator einen solchen Rechteckpuls generiert, um hierdurch die Verstärkung des Regelverstärkers über die vorgegebene Zeit hinweg kontinuierlich zu verringern. Sobald das Monoflop nicht mehr gesetzt ist, wird die Verstärkung des Regelverstärkers wieder kontinuierlich erhöht.

Eine weitere IR-Empfängerschaltung ist aus der WO-A-02/13403 bekannt.

Für das eingangs beschriebene Infrarotsignal sind grundsätzlich unterschiedliche Codierungs- und Modulationsverfahren sowie die Verwendung verschiedener Trägerfrequenzen bekannt. Den bekannten unterschiedlichen Verfahren ist gemeinsam, dass optische Störeinflusse unterdrückt werden. Es ist somit beispielsweise auch möglich, in räumlicher Nähe zueinander mehrere Geräte mittels verschiedener Fernbedienungseinheiten zu steuern, ohne dass eine gegenseitige Beeinflussung erfolgt. Mit anderen Worten ist gewährleistet, dass das Absetzen eines Fernsteuersignals normalerweise lediglich zu einer entsprechenden Steuerung des zugeordneten Geräts (z.B. Fernsehgerät) führt und nicht unerwünscht auch von einem weiteren Gerät (z.B. DVD-Spieler) als Steuerbefehl interpretiert wird, dem ja eine eigene Fernbedienungseinheit zugeordnet ist.

Es kann jedoch auch erwünscht sein, mittels einer einzigen Universal-Fernbedienungseinheit mehrere Geräte zu steuern, so dass die Notwendigkeit entfällt, für jedes der vorhandenen Geräte eine eigene zugeordnete Fernbedienungseinheit bereithalten zu müssen. Dies kann insbesondere durch ein IR-Empfangsmodul eines so genannten Multimedia Personal Computers realisiert werden, das neben einem Fernsehgerät beispielsweise auch einen DVD-Spieler oder eine Set-Top-Box für das Fernsehgerät steuern kann, wobei für diese weiteren Geräte ursprünglich jeweils eine eigene Fernbedienungseinheit vorgesehen war. Da das IR-Empfangsmodul des Multimedia Personal Computers mittels einer so genannten Blastereinheit bzw. hierin vorgesehenen Infrarotsendern optisch mit den IR-Empfängern der weiteren Geräte verbunden ist, ist eine Fernsteuerung über die Universal-Fernbedienungseinheit und das IR-Empfangsmodul möglich. Das Einlernen der hierfür benötigten Steuerbefehle kann anhand der Infrarotfernsteuersignale der ursprünglich vorhandenen Fernbedienungseinheiten der weiteren Geräte erfolgen, d.h. das IR-Empfangsmodul soll die eingelernten Steuerbefehle möglichst originalgetreu wiedergeben können.

Unabhängig von dem Wunsch nach einer einzigen Universal-Fernbedienungseinheit kann es auch erwünscht sein, dass die eingangs genannte IR-Empfängerschaltung ein Bestandteil eines so genannten Extenders ist, um das empfangene Infrarotsignal zu verstärken und in der verstärkten - und insbesondere noch modulierten - Form wieder auszugeben.

Aufgabe der Erfindung ist, eine IR-Empfängerschaltung der eingangs genannten Art zu schaffen, die es auf einfache Art ermöglicht, insbesondere auch bei Anwesenheit eines Störfelds, die vorstehend genannten Funktionen bereitzustellen.

Diese Aufgabe wird durch eine IR-Empfängerschaltung mit den Merkmalen des Anspruchs 1 gelöst, und insbesondere dadurch, dass die Empfängerschaltung eine Logikschaltung umfasst, die dazu ausgelegt ist, das Pulsfolgensignal des Komparators und das Ausgabesignal des Demodulators logisch miteinander zu verknüpfen, um aus dem Pulsfolgensignal ein dem Infrarotsignal entsprechendes zusätzliches Ausgabesignal zu extrahieren.

Wird von der IR-Empfängerschaltung ein Infrarotsignal empfangen, das durch eine bestimmte Abfolge an so genannten Bursts codiert ist, beispielsweise mittels Puls-Code-Modulation (PCM), Zweiphasenmarkierung oder Pulsweitenmodulation (PWM), generiert der genannte Komparator während des Empfangs eines jeden der Bursts ein digitales Pulsfolgensignal, das die Frequenz des Trägersignals des Infrarotsignals aufweist, da ein jeder der Bursts mit jeder seiner Schwingungen den Komparator-Schwellwert, der entsprechend niedrig gewählt ist, überschreitet. Hierdurch wird das empfangene Infrarotsignal als ein immer noch moduliertes, digitales Ausgabesignal nachgebildet. Dieses Ausgabesignal wird zusätzlich zu dem Ausgabesignal des Demodulators bereitgestellt, welches üblicherweise von der IR-Empfängerschaltung ausgegeben wird.

Um hierbei sicherzustellen, dass es sich bei dem von dem Komparator generierten Pulsfolgensignal auch tatsächlich um ein Signal handelt, das dem Infrarotsignal - also dem Nutzsignal - entspricht, wird das Pulsfolgensignal nur dann zur Erzeugung des zusätzlichen Ausgabesignals herangezogen, wenn zugleich aufgrund des Ausgabesignals des Demodulators der Empfang eines Bursts eines Infrarotsignals festgestellt wird.

Das derart extrahierte Pulsfolgensignal kann dann zu den eingangs erläuterten Zwecken verwendet werden, beispielsweise als Extender-Funktion.

Das dem genannten Komparator für den Schwellwertvergleich zugeführte Signal wird dem Signalverarbeitungspfad der IR-Empfängerschaltung nach einer Signalverstärkung und insbesondere nach einer Bandpassfilterung oder einer sonstigen weiteren Signalverarbeitung, jedoch noch vor der endgültigen Demodulation entnommen.

Bei der Logikschaltung kann es sich um einfaches Logikgatter handeln, insbesondere um ein UND-Gatter. Einer oder jeder der beiden Eingänge des Logikgatters kann ein invertierender Eingang sein, so dass das Pulsfolgensignal des Komparators und/oder das Ausgabesignal des Demodulators dem Logikgatter letztlich als invertiertes Signal zugeführt wird. Das genannte zusätzliche Ausgabesignal der Empfängerschaltung ist in diesem Fall also im Wesentlichen digital (diskrete Signalpegel).

Alternativ zu einer digitalen Logikschaltung kann die Logikschaltung als eine analoge Verknüpfungsschaltung ausgebildet sein, wobei in dem genannten zusätzlichen Ausgabesignal das Pulsfolgensignal des Komparators auf das Trägersignal des Infrarotsignals aufmoduliert und im Wesentlichen sinusförmig ist. Das zusätzliche Ausgabesignal ist in diesem Fall also analog oder nur quasi-digital. Beispielsweise kann bei einer einfachen Ausführungsform die genannte Logikschaltung einen Transistor aufweisen, der bewusst nicht übersteuert wird.

Grundsätzlich kann es vorgesehen sein, dass das von dem Komparator generierte Pulsfolgensignal ausschließlich für die logische Verknüpfung mit dem Ausgabesignal des Demodulators verwendet wird. Mit anderen Worten kann der genannte Komparator ausschließlich zur Erzeugung des erläuterten zusätzlichen Ausgabesignals dienen. Bevorzugt umfasst die Verstärkerschaltung jedoch einen Regelverstärker, wobei ein mit dem Ausgang der Verstärkerschaltung oder des Bandpassfilters verbundenes Regellogikteil zur automatischen Verstärkungsregelung des Regelverstärkers vorgesehen ist, und wobei der Komparator Bestandteil des ohnehin vorhandenen Regellogikteils ist. In diesem Fall kann zur Umsetzung der Erfindung also ein bereits zum Zweck der automatischen Verstärkungsregelung vorhandener Komparator, wie er vorstehend in Zusammenhang mit dem Stand der Technik erläutert ist, verwendet werden. Insbesondere in diesem Fall entspricht der genannte Schwellwert des Komparators einem von dem Ruhepegel des Ausgangssignals der Verstärkerschaltung oder des Bandpassfilters verschiedenen Wert.

Nach einer anderen Ausbildung der Erfindung hingegen entspricht der Schwellwert des Komparators zumindest im Wesentlichen dem Ruhepegel des Ausgangssignals der Verstärkerschaltung oder des Bandpassfilters (Schwellwert Null). Dies ist deshalb von Vorteil, da dann ein maximal langes Pulsfolgensignal extrahiert werden kann, dessen Dauer der Dauer des zugehörigen Bursts besonders gut entspricht, wie im Zusammenhang mit der nachstehenden Figurenbeschreibung noch deutlich wird.

Unter diesem Gesichtspunkt ist es bevorzugt, wenn der genannte Schwellwert des Komparators zumindest geringer ist als derjenige Schwellwert, der in dem Demodulator für die Demodulation des Infrarotsignals berücksichtigt wird.

Weitere vorteilhafte Ausgestaltungen der Erfindung sind in der nachfolgenden Figurenbeschreibung, der Zeichnung und den Unteransprüchen angegeben.

Die Erfindung wird nachfolgend lediglich beispielhaft anhand der Zeichnung erläutert. In dieser zeigen:
- Fig. 1: ein Blockschaltbild einer IR-Empfängerschaltung gemäß der Erfindung,
- Fig. 2: ein Blockschaltbild eines Demodulators der IR-Empfängerschaltung gemäß Fig. 1,
- Fig. 3: ein Logikdiagramm zur Erläuterung der Funktionsweise des Demodulators gemäß Fig. 2, und
- Fig. 4: verschiedene, von der IR-Empfängerschaltung gemäß Fig. 1 erzeugte Signale.

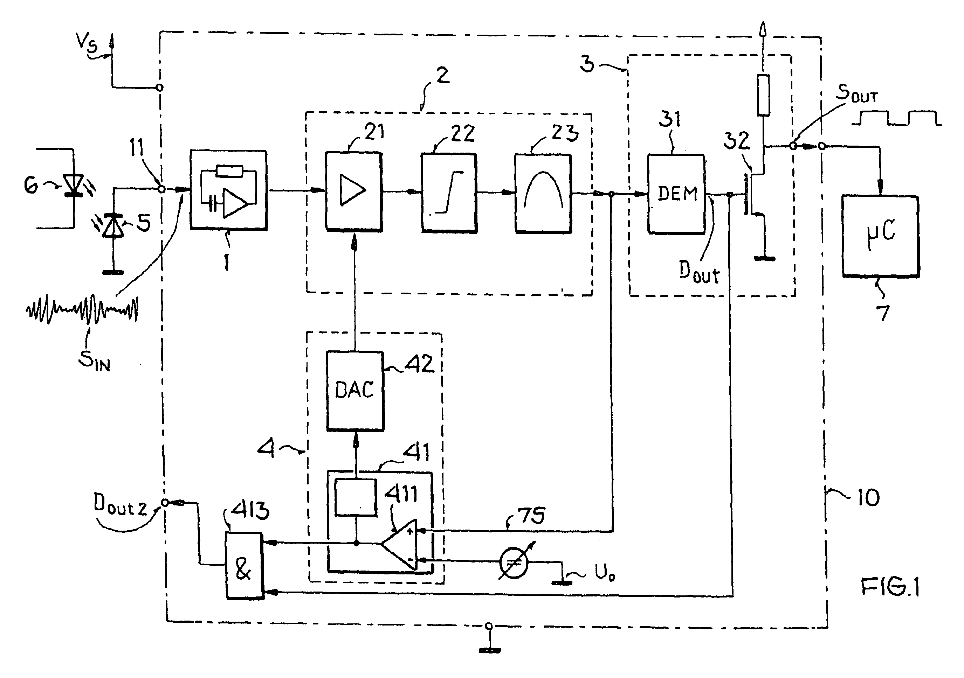

Fig. 1 zeigt ein Blockschaltbild einer IR-Empfängerschaltung 10 und seiner Umgebung. Von einer optischen Sendediode 6 ausgestrahlte trägermodulierte Daten werden als Infrarotpulse von einer Photodiode 5 empfangen. Die auf die Photodiode 5 auftreffenden Infrarotpulse mit einer Trägerfrequenz von beispielsweise 38 kHz werden dort in elektrische Stromsignale S_{IN} umgewandelt, die dann an einem Eingangsanschluss 11 der IR-Empfängerschaltung 10 anliegen. Diese elektrischen Stromsignale S_{IN} werden einer als Transimpedanzverstärker arbeitenden Eingangsschaltung 1 zugeführt, welche die Stromsignale S_{IN} verstärkt und in Spannungssignale umwandelt. Hierbei muss die erzeugte Spannung groß genug sein, um den Rauschanteil in nachfolgenden Signalaufbereitungsstufen vernachlässigbar zu machen. In dem nachfolgenden Signalaufbereitungsteil 2 werden diese Spannungssignale nochmals mittels eines Regelverstärkers 21 verstärkt, von einem Limiter 22 begrenzt und anschließend in einem Bandpassfilter 23 gefiltert.

Die Signalbegrenzung mittels des Limiters 22 ist erforderlich, um eine Übersteuerung des nachfolgenden Bandpassfilters 23 zu vermeiden und um impulsförmige Störungen, die z.B. über einen Versorgungsanschluss Vs in die IR-Empfängerschaltung 10 gelangen, zu unterdrücken. In einem an den Signalaufbereitungsteil 2 anschließenden Auswerteteil 3 wird das bandpassgefilterte Signal Bₒᵤₜ mittels eines Demodulators 31 demoduliert und über einen Treibertransistor 32 mit zugehörigem Lastwiderstand als Ausgangssignal Sₒᵤₜ einem Mikrocontroller 7 zur weiteren Verarbeitung zur Verfügung gestellt.

Um die Verstärkung des von der Sendediode 6 ausgestrahlten Nutzsignals und damit die Empfindlichkeit der IR-Empfängerschaltung zu optimieren, weist die IR-Empfängerschaltung 10 eine Regelschaltung 4 auf, die dem Regelverstärker 21 Regelsignale zuführt und die ihrerseits das Ausgangssignal Bₒᵤₜ des Bandpassfilters 23 über eine Leitung 75 erhält. Die Aufgabe dieser Regelschaltung 4 ist es, das Signal/Rauschverhältnis zu optimieren, indem die Verstärkung des Eingangssignals S_{IN} in Abhängigkeit von der Größe des Eingangssignals verändert wird. Die Regelschaltung 4 ist aus einem Regellogikteil (Automatic Gain Control, AGC) 41 und einem Digital-Analog-Umsetzer (Digital/Analog Converter, DAC) 42 aufgebaut. Der Regellogikteil 41 trennt die Nutz- von den Störsignalen und stellt die Verstärkung für die Nutzsignale auf ein möglichst hohes Niveau, womit eine hohe Empfindlichkeit für die Nutzsignale erreicht wird. Gleichzeitig werden Störeinflüsse von z.B. Fremdlicht reduziert. Der Digital-Analog-Umsetzer 42 wandelt die von dem Regellogikteil 41 erzeugte digitale Verstärkerinformation in eine analoge Steuerspannung für den Regelverstärker 21 um.

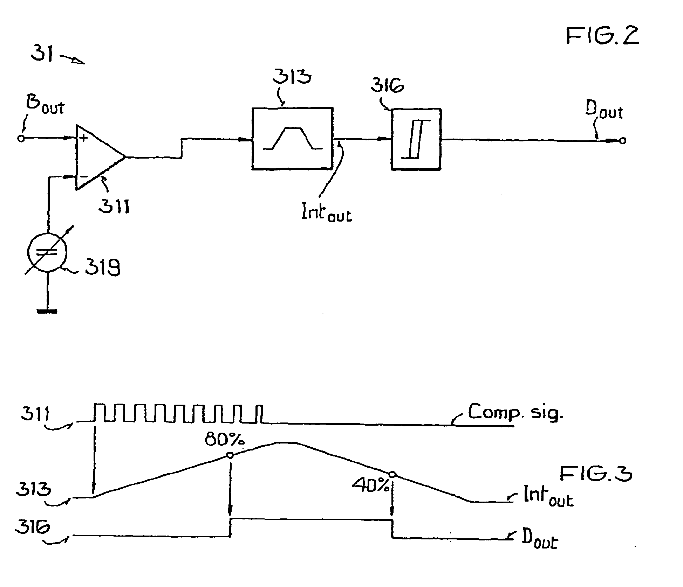

Im Folgenden wird die Funktionsweise des Demodulators 31 anhand Fig. 2 und des zugehörigen Diagramms gemäß Fig. 3 näher erläutert.

Gemäß Fig. 2 wird das vom Bandpassfilter 23 kommende Ausgangssignal Bₒᵤₜ mittels eines Komparators 311 digitalisiert, dessen Schwellspannung 319 ein fest eingestellter Referenzwert ist, der jedoch gegenüber dem Bandpassfilter-Ruhepegel auch signalabhängig über mehrere Stufen eingestellt werden kann. Die als Pulsfolgen Comp_{sig} (siehe Diagramm 311 in Fig. 3) vorliegenden digitalen Signale des Komparators 311 werden in einer analogen Integratorschaltung 313 integriert. Dieser Integrator 313 kennt die Zustände LADEN bzw. ENTLADEN bis zu den Aussteuerungsgrenzen 0 % bzw. 100 %, wodurch ein limitierter integraler Spannungsverlauf (siehe Diagramm 313 in Fig. 3) als Ausgangssignal Intₒᵤₜ erzeugt wird. Am Ausgang des Integrators 313 ist ein Schmitt-Trigger 316 vorgesehen. Im vorliegenden Anwendungsbeispiel liegen die Ein- bzw. AusSchaltschwellen für den Schmitt-Trigger 316 bei 80 % bzw. 40 % (siehe Diagramm 316 in Fig. 3), d.h. die positive Flanke des rechteckförmigen Demodulatorausgabesignals Dₒᵤₜ wird bei einem ansteigenden Integratorwert von 80 % des Maximalwerts und die negative Flanke bei einem rückgeführten Wert des Integratorwerts von 40 % erzeugt.

Zur Verstärkungsregelung des Regelverstärkers 21 umfasst der Regellogikteil 41 insbesondere einen Komparator 411 (Fig. 1), an dessen einem Eingang das Ausgangssignal Bₒᵤₜ des Bandpassfilters 23 und an dessen anderem Eingang ein Regelschwellwert U₀ anliegt. Die Regelung erfolgt in der Art, wie sie vorstehend in Zusammenhang mit dem Stand der Technik erläutert ist.

Unabhängig von der Verwendung des Ausgangssignals des Komparators 411 für die Verstärkungsregelung ist der Ausgang des Komparators 411 mit einem Eingang eines UND-Gatters 413 verbunden, dessen anderer Eingang mit dem Ausgang des Demodulators 31 verbunden ist (Ausgabesignal Dout).

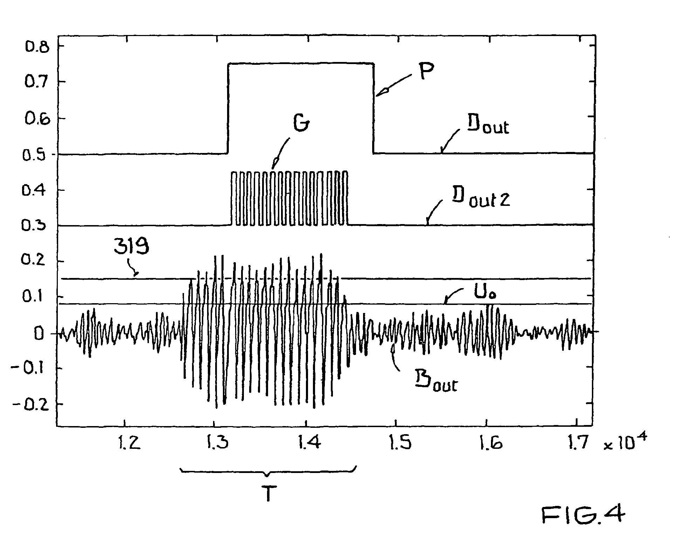

Die Wirkung des UND-Gatters 413 ist in Fig. 4 gezeigt, in der das Ausgabesignal Dₒᵤₜ des Demodulators 31, das Ausgabesignal Dₒᵤₜ₂ des UND-Gatters 413 und das Ausgabesignal Bₒᵤₜ des Bandpassfilters 23 dargestellt sind, wobei zu dem Ausgangssignal Bₒᵤₜ des Bandpassfilters 23 der Regelschwellwert Uo angegeben ist.

Im Bereich T entspricht das Ausgangssignal Bₒᵤₜ des Bandpassfilters 23 einem Burst eines Fernsteuersignals, das von der IR-Empfängerschaltung 10 empfangen wurde. Im Bereich T liegt das Ausgangssignal Bₒᵤₜ des Bandpassfilters 23 mit jeder seiner Schwingungen über dem Regelschwellwert Uo, so dass vom Komparator 411 im Bereich T ein nach Art des Comp_{sig}-Signals 311 aus Fig. 3 ausgebildetes regelmäßiges Pulsfolgensignal (nicht separat dargestellt) erzeugt wird, das die Frequenz des Ausgangssignals Bₒᵤₜ des Bandpassfilters 23 und damit die Frequenz des Trägersignals des Fernsteuersignals besitzt.

Mittels des UND-Gatters 413 wird das vom Komparator 411 erzeugte Pulsfolgensignal mit dem Ausgabesignal Dₒᵤₜ des Demodulators 31 verundet, um das Ausgabesignal Dₒᵤₜ₂ zu erzeugen, das dann ebenfalls die Frequenz des Trägersignals des Fernsteuersignals besitzt. Das Verunden mit dem Ausgabesignal Dₒᵤₜ des Demodulators 31 wird deshalb vorgenommen, um Pulse auszuschließen, die nicht auf einem Fernsteuersignal basieren, sondern aufgrund der kontinuierlichen Regeltätigkeit des Regelverstärkers 21 und der Regelschaltung 4 mit dem Regellogikteil 41 entstehen, so dass eine Verfälschung des dem Fernsteuersignal entsprechenden Ausgabesignals Dₒᵤₜ₂ verhindert werden kann.

Die Dauer der in Fig. 4 dargestellten Pulsgruppe G des Ausgabesignals Dₒᵤₜ₂ ist dabei etwas kürzer als die Dauer des Rechtecksignals P des Ausgabesignals Dₒᵤₜ des Demodulators 31, wobei die Pulsgruppe G und das Rechtecksignal P auf demselben Burst basieren. Die vergleichsweise kürzere Dauer der Pulsgruppe P ist dadurch bedingt, dass das Rechtecksignal P des Demodulators 31 aufgrund der Verwendung des Integrators 313 und des Schmitt-Triggers 316 und der hierfür gewählten Einstellungen dem zugrunde liegenden Burst und dem von dem Komparator 411 erzeugten Pulsfolgensignal nachläuft. Dies ist jedoch nicht weiter nachteilig, da ein Burst üblicherweise eine gewisse Toleranz hinsichtlich seiner Dauer aufweisen darf.

Die Verwendung des Komparators 411 zur Erzeugung des dem UND-Gatter 413 zugeführten Pulsfolgensignals hat den Vorteil, dass bereits vorhandene IR-Empfängerschaltungen, die i.d.R. als Halbleiterbauelemente ausgebildet sind, verwendet werden können.

Alternativ kann auch ein separater Komparator vorgesehen sein, der das Ausgangssignal des Bandpassfilters 23 mit dem Ruhepegel (Null-Pegel) des Ausgangssignals des Bandpassfilters 23 oder einem von dem Ruhepegel lediglich geringfügig abweichenden Pegel vergleicht. Hierdurch kann trotz des Nachlaufens des Rechecksignals P gegenüber dem zugrunde liegenden Burst eine sich über die volle Dauer des Rechtecksignals P des Ausgabesignals Dₒᵤₜ des Demodulators 31 erstreckenden Pulsgruppe G erzeugt werden, da das Fernsteuersignal bzw. dessen Trägerfrequenz auch zwischen zwei Bursts detektierbar ist.

Grundsätzlich ist es auch möglich, das von dem Komparator 311 erzeugte Pulsfolgensignal Comp_{sig} zur Verundung mit dem Ausgabesignal Dₒᵤₜ des Demodulators 31 heranzuziehen.

Die vorliegende Erfindung ermöglicht auf einfache Weise, ein einem Fernsteuersignal nachgebildetes Signal bereitzustellen.

### Bezugszeichenliste

- 1: Eingangsschaltung
- 2: Signalaufbereitungsteil
- 3: Auswerteteil
- 4: Regelschaltung
- 5: Photodiode
- 6: Sendediode
- 7: Mikrocontroller
- 10: IR-Empfängerschaltung
- 11: Eingangsanschluss
- 21: Regelverstärker
- 22: Limiter
- 23: Bandpassfilter
- 31: Demodulator
- 32: Treibertransistor
- 41: Regellogikteil
- 42: Digital-Analog-Umsetzer
- 75: Leitung
- 311: Komparator
- 313: Integratorschaltung
- 316: Schmitt-Trigger
- 319: Schwellspannung
- 411: Komparator
- 413: UND-Gatter

- Bₒᵤₜ: Ausgangssignal des Bandpassfilters Comp_{sig} Pulsfolgensignal
- Dₒᵤₜ: Ausgabesignal des Demodulators
- G: Pulsgruppe
- Intout: Ausgangssignal des Integrators
- P: Rechtecksignal
- S_{IN}: Stromsignale
- Sₒᵤₜ: Ausgangssignal des Treibertransistors
- T: Bereich
- Uo: Regelschwellwert
- Vs: Versorgungsanschluss

## Patentansprüche

1. Infrarot-Empfängerschaltung (10) zum Verarbeiten eines trägermodulierten Infrarotsignals, mit einer Verstärkerschaltung (1, 21) und einem der Verstärkerschaltung nachgeschalteten Demodulator (31), wobei ein Komparator (411) vorgesehen ist, der dazu ausgelegt ist, ein Ausgangssignal (Bout) der Verstärkerschaltung (1, 21) oder eines der Verstärkerschaltung (1, 21) nachgeschalteten Bandpassfilters (23) mit einem Schwellwert (Uo) zu vergleichen, um hieraus ein digitales Pulsfolgensignal zu erzeugen,
**dadurch gekennzeichnet,**
**dass** die Empfängerschaltung (10) eine Logikschaltung (413) umfasst, die dazu ausgelegt ist, das Pulsfolgensignal des Komparators (411) und ein Ausgabesignal (Dₒᵤₜ) des Demodulators (23) logisch miteinander zu verknüpfen, um aus dem Pulsfolgensignal ein dem Infrarotsignal entsprechendes zusätzliches Ausgabesignal (Dₒᵤₜ₂) zu extrahieren.

2. Empfängerschaltung nach Anspruch 1,
**dadurch gekennzeichnet,**
**dass** die Logikschaltung (413) als Logikgatter, insbesondere als UND-Gatter, ausgebildet ist.

3. Empfängerschaltung nach Anspruch 1,
**dadurch gekennzeichnet,**
**dass** die Logikschaltung als eine analoge Verknüpfungsschaltung ausgebildet ist, insbesondere mit einem nicht vollständig ausgesteuerten Transistor.

4. Empfängerschaltung nach einem der Ansprüche 1 bis 3,
**dadurch gekennzeichnet,**
**dass** der Schwellwert (Uo) geringer ist als ein Schwellwert (319), der zur Demodulation des Infrarotsignals in dem Demodulator (31) berücksichtigt wird.

5. Empfängerschaltung nach einem der Ansprüche 1 bis 4,
**dadurch gekennzeichnet,**
**dass** die Verstärkerschaltung (1,21) einen Regelverstärker (21) umfasst, wobei ein mit dem Ausgang der Verstärkerschaltung (1, 21) oder des Bandpassfilters (23) verbundenes Regellogikteil (41) zur automatischen Verstärkungsregelung des Regelverstärkers (21) vorgesehen ist, und wobei der Komparator (411) Bestandteil des Regellogikteils (4 1) ist.

6. Empfängerschaltung nach einem der Ansprüche 1 bis 4,
**dadurch gekennzeichnet,**
**dass** der Schwellwert (U₀) dem Ruhepegel des Ausgangssignals (Bₒᵤₜ) der Verstärkerschaltung (1, 21) oder des Bandpassfilters (23) entspricht.

## Claims

1. An infrared receiver circuit (10) for the processing of a carrier-modulated infrared signal, having an amplifier circuit (1, 21) and a demodulator (31) connected downstream of the amplifier circuit, wherein a comparator (411) is provided which is adapted to compare an output signal (Bout) of the amplifier circuit (1, 21) or of a band-pass filter (23) connected downstream of the amplifier circuit (1, 21) with a threshold value (U₀) to generate a digital pulse train signal therefrom,
**characterized in that**
the receiver circuit (10) includes a logic circuit (413) which is adapted to link the pulse train signal of the comparator (411) and an output signal (Dₒᵤₜ) of the demodulator (23) logically with one another to extract an additional output signal (Dₒᵤₜ₂) corresponding to the infrared signal from the pulse train signal.

2. A receiver circuit in accordance with claim 1, **characterized in that** the logic circuit (413) is made as a logic gate, in particular as an AND gate.

3. A receiver circuit in accordance with claim 1, **characterized in that** the logic circuit is made as an analog link circuit, in particular with a transistor which is not completely set to maximum gain,

4. A receiver circuit in accordance with any one of the claims 1 to 3, **characterized in that** the threshold value (Uo) is lower than a threshold value (319) which is taken into account for the demodulation of the infrared signal in the demodulator (31).

5. A receiver circuit in accordance with any one of the claims 1 to 4, **characterized in that** the amplifier circuit (1, 21) includes a regulation amplifier (21), with a regulation logic part (41) connected to the output of the amplifier circuit (1, 21) or of the band-pass filter (23) being provided for the automatic amplification regulation of the regulation amplifier (21), and with the comparator (411) being a component of the regulation logic part (41).

6. A receiver circuit in accordance with any one of the claims 1 to 4, **characterized in that** the threshold value (Uo) corresponds to the quiescent level of the output signal (Bout) of the amplifier circuit (1, 21) or of the band-pass filter (23).

## Revendications

1. Circuit récepteur infrarouge (10) pour le traitement d'un signal infrarouge modulé en porteuse, comprenant un circuit amplificateur (1, 21) et un démodulateur (31) branché à la suite du circuit amplificateur, dans lequel il est prévu un comparateur (411) qui est conçu pour comparer un signal de sortie (Bₒᵤₜ) du circuit amplificateur (1, 21) ou d'un filtre passe-bande (23) branché à la suite du circuit amplificateur (1, 21) avec une valeur seuil (Pₒ) afin de produire à partir de celui-ci un signal numérique en succession d'impulsions,
**caractérisé en ce que**
le circuit récepteur (10) comprend un circuit logique (413) qui est conçu pour enchaîner de manière logique le signal en succession d'impulsions du comparateur (411) et un signal de sortie (Dout) du démodulateur (23) l'un avec l'autre, afin d'extraire à partir du signal en succession d'impulsions un signal de sortie additionnel (Dₒᵤₜ₂) correspondant au signal infrarouge.

2. Circuit récepteur selon la revendication 1,
**caractérisé en ce que** le circuit logique (413) est réalisé sous forme de porte logique, en particulier sous forme de porte "ET".

3. Circuit récepteur selon la revendication 1,
**caractérisé en ce que** le circuit logique est réalisé sous forme de le circuit de chaînage analogique, en particulier avec un transistor qui n'est pas totalement piloté.

4. Circuit récepteur selon l'une des revendications 1 à 3,
**caractérisé en ce que** la valeur seuil (Uₒ) est inférieure à une valeur seuil (319) qui est prise en compte pour la démodulation du signal infrarouge dans le démodulateur (31).

5. Circuit récepteur selon l'une des revendications 1 à 4,
**caractérisé en ce que** le circuit amplificateur (1, 21) comprend un amplificateur régulateur (21), dans lequel il est prévu une partie logique de régulation (41), reliée à la sortie du circuit amplificateur (1, 21) ou du filtre passe-bande (23), pour la régulation d'amplification automatique de l'amplificateur régulateur (21), et dans lequel le comparateur (411) est une partie constitutive de la partie logique de régulation (41).

6. Circuit récepteur selon l'une des revendications 1 à 4,
**caractérisé en ce que** la valeur seuil (Uₒ) correspond au niveau de repos du signal de sortie (Bₒᵤₜ) du circuit amplificateur (1, 21) ou du filtre passe-bande (23).
